(19) Europäisches Patentamt
European Patent Office
Office européen des brevets

(11) **EP 0 921 389 A2**

(12) **EUROPÄISCHE PATENTANMELDUNG**

(43) Veröffentlichungstag:
09.06.1999 Patentblatt 1999/23

(51) Int. Cl.⁶: **G01N 11/14**

(21) Anmeldenummer: 98121863.9

(22) Anmeldetag: 17.11.1998

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 25.11.1997 DE 19752221

(71) Anmelder:
Anton Steinecker Maschinenfabrik GmbH
85356 Freising-Attaching (DE)

(72) Erfinder:
Banke, Friedrich Dipl.-Ing
84116 Inning am Holz (DE)

(74) Vertreter:
Grünecker, Kinkeldey,
Stockmair & Schwanhäusser
Anwaltssozietät
Maximilianstrasse 58
80538 München (DE)

(54) **Verfahren und Vorrichtung zur Viskositätsmessung von Fluiden**

(57) Die Erfindung betrifft ein Verfahren und eine Vorrichtung zur Viskositätsmessung von Suspensionen mit hohen Feststoffbeladungen bzw. großen Partikeldurchmessern, mit Newtonschem und Nicht-Newtonschem Fließverhalten. Für solche Stoffe konnte mit bekannten Viskosimetern, wie Rotationsviskosimetern, die auf der Basis eines Scherspalts arbeiten, aufgrund der geringen Spaltgröße die dynamische Viskosität nicht ermittelt werden. Die Erfindung schafft nun die Möglichkeit, durch eine Vergleichsmessung zwischen einem Fluid mit bekannter dynamischer Viskosität und dem zu untersuchenden Fluid mittels eines beliebigen, zur Erzeugung laminarer wie auch turbulenter Strömung geeigneten Rührwerks die dynamische Viskosität des Nicht-Newtonschen Fluids durch eine Leistungs- und Drehzahlmessung für eine oder mehrere unterschiedliche Reynoldszahlen genau zu bestimmen.

FIG. 1

## Beschreibung

Die vorliegende Erfindung betrifft ein Verfahren und eine Vorrichtung zur Viskositätsmessung, insbesondere von Nicht-Newtonschen Fluiden, wie z.B. Suspensionen.

Es ist nach dem Stand der Technik bekannt, die Viskosität eines Newtonschen Fluids durch Geräte zu messen, die nach dem Prinzip von Scherspalten arbeiten. Solche Geräte sind z.B. ein Rotationsviskosimeter oder ein Kugelfallviskosimeter. Bei sogenannten Newtonschen Medien ist die Stärke der Reibungskraft zwischen einzelnen Schichten einer laminaren Strömung bestimmt durch die dynamische Viskosität oder Zähigkeit des Mediums, die Fläche der Schicht und den Geschwindigkeitsgradienten zu benachbarten Schichten. Für Nicht-Newtonsche Substanzen, für die das Newtonsche Schubspannungsgesetz nicht gilt, und/oder deren Verformung nicht plastisch ist, sind diese Viskosimeter jedoch nur eingeschränkt zur Bestimmung der dynamischen Viskosität geeignet. Zu den Nicht-Newtonschen Substanzen gehören insbesondere Suspensionen, d.h. Flüssigkeiten, in denen feste Stoffe aufgeschwemmt sind. Solche Feststoffe enthaltende Newtonsche und Nicht-Newtonsche Fluide sind mit den zuvor genannten herkömmlichen Viskosimetem nur charakterisierbar, wenn sie als Reinstoffe vorliegen bzw. nur kleine Partikeldurchmesser und kleine Feststoffbeladungen aufweisen. Wenn die Partikelgrößen und/oder die Feststoffbeladung ansteigen, z.B. über ca. ein Zehntel des vorhandenen Scherspalts, ist keine genaue Messung aufgrund von Verstopfung und eines dominierenden Einflusses der Partikelwechselwirkung möglich. Dies trifft insbesondere bei Suspensionen zu, wie sie z.B. in der Brautechnik (Maschen), Lebensmittelindustrie oder Biotechnologie vorkommen.

Ein weiteres nach dem Stand der Technik bekanntes Gerät zur Messung der Viskosität ist das Schwingungsviskosimeter. Es hat sich herausgestellt, daß auch diese Schwingungsviskosimeter keine verläßlichen Messungen der tatsächlichen Viskosität einer Suspension schaffen. Vielmehr wird bei den Schwingungsviskosimetern häufig nur die Viskosität der Trägerflüssigkeit gemessen. Die meist großen Meßfehler hängen zudem noch von Eigenschaften der Suspension, wie dem Durchmesser der aufgeschwemmten Feststoffteilchen, und der Feststoffbeladung ab.

Aus dem Stand der Technik ist es daher nicht möglich, zuverlässige und genaue Messungen der dynamischen Viskosität einer Suspension zu erhalten.

Es ist daher die Aufgabe der vorliegenden Erfindung, ein verbessertes Verfahren und eine verbesserte Vorrichtung zur Viskositätsmessung, insbesondere von Suspensionen mit hohen Feststoffbeladungen bzw. großen Partikeldurchmessern mit Newton-schem und Nicht-Newtonschem Fließverhalten, mit erhöhter Meßgenauigkeit und Zuverlässigkeit zu schaffen.

Erfindungsgemäß wird diese Aufgabe gelöst durch ein Verfahren zur Viskositätsmessung von Fluiden, insbesondere von Suspensionen mit hohen Feststoffbeladungen bzw. großen Partikeldurchmessem, mit Newtonschem und Nicht-Newtonschem Fließverhalten, unter Verwendung einer Rührvorrichtung mit einem Rührbehälter zur Aufnahme eines Fluids, einem in dem Rührbehälter angeordneten Rührorgan und einer Vorrichtung zur Erzeugung einer Drehbewegung des Rührorgans bezüglich des Rührbehälters, wobei die Leistungsaufnahme bei einer Vielzahl von ermittelbaren Drehzahlwerten für ein Fluid mit bekannter dynamischer Viskosität gemessen wird und eine rührvorrichtungsspezifische und von der Art des Mediums unabhängige Leistungskennlinie bestimmt wird, und Messen der Leistungsaufnahme bei wenigstens einer Drehzahl für Newtonsche Fluide, oder bei verschiedenen Drehzahlen für Nicht-Newtonsche Fluide as das zu untersuchende Fluid, dessen Viskosität ermittelt werden soll, und Berechnen der gesuchten Viskosität des zu untersuchenden Mediums aus der Leistungskennlinie, der gemessenen Leistungsaufnahme und der für die Leistungsaufnahmemessung angewendeten Drehzahl bzw. Drehzahlen.

Das erfindungsgemäße Verfahren beruht auf einem Vergleich der Leistungsaufnahmen einer Vorrichtung zur Erzeugung einer Strömung relativ zu einem Agitationsorgan in Abhängigkeit von der Anströmgeschwindigkeit für ein zu messendes Fluid und ein bekanntes Fluid mit bekannter Viskosität. Dieses Prinzip ist darauf begründet, daß die Leistungskennlinie einer beliebigen Rührvorrichtung, die den Leistungsbeiwert (Newtonzahl) in Abhängigkeit von der Reynoldszahl zeigt, unabhängig von der Viskosität des Fluids ist.

Wenn somit einmal die Leistungskennlinie einer Rührvorrichtung unter Verwendung eines bekannten Newtonschen Fluids mit bekannter Viskosität aufgenommen wurde, kann unter Verwendung dieser viskositätsunabhängigen Leistungskennlinie durch Messung der Leistungsaufnahme bei mehreren verschiedenen Strömungsgeschwindigkeiten für das zu untersuchende Medium dessen dynamische Viskosität ermittelt werden bzw. bei Nicht-Newtonschen Fluiden die dynamische Viskosität als Funktion der Scherrate.

Die Leistungsmessung für das zu untersuchende Fluid erfolgt insbesondere im nicht-turbulenten Bereich, d.h. für eine Reynoldszahl $Re$, die kleiner ist als die kritische Reynoldszahl $Re_{krit}$, da in diesem Bereich die Meßgenauigkeit aufgrund der starken Abhängigkeit der Leistungsaufnahme von der Reynoldszahl und somit der Strömungsgeschwindigkeit bei vorgegebener fester dynamischer Viskosität verbessert ist. Im turbulenten Bereich verläuft dagegen die Leistungskennlinie annähernd waagrecht, so daß selbst bei hohen Unterschieden in der Reynoldszahl bzw. der Strömungsgeschwindigkeit bei festgehaltender dynamischer Viskosität keine oder nur sehr geringe Änderungen in der Leistungsaufnahme auftreten.

Für ausgeprägtes Nicht-Newtonsches Fließverhalten ist eine Leistungsmessung im turbulenten Bereich möglich, da hier die dynamische Viskosität von der Scherrate, d.h. Drehzahl des Rührwerks abhängt.

Insbesondere werden zur Bestimmung der dynamischen Viskosität Nicht-Newtonscher Fluide wenigstens drei Messungen der Leistungsaufnahme bei unterschiedlichen Strömungsgeschwindigkeiten, d.h. unterschiedlichen Drehzahlen der Rührvorrichtung, durchgeführt. Bei Nicht-Newtonschen Medien ist die Viskosität von der Scherrate, d.h. der Strömungsgeschwindigkeit abhängig. Eine Messung der Leistungsaufnahme bei verschiedenen Strömungsgeschwindigkeiten korrespondiert daher mit entsprechenden unterschiedlichen, scherratenabhängigen dynamischen Viskositäten des Nicht-Newtonschen Mediums. Der scherratenabhängige Verlauf der dynamischen Viskosität eines zu untersuchenden Nicht-Newtonschen Fluids läßt sich aus den Ostwaldschen Gleichungen oder vergleichbaren Rechenmodellen bestimmen.

Weiter ist es insbesondere vorteilhaft, für das erferfiindungsgemäße Verfahren zur Durchführung der Vergleichsmessung ein Newtonsches Fluid mit hoher Viskosität zu verwenden. Damit wird die Meßgenauigkeit aufgrund der höheren Leistungsaufnahmen bei sehr geringen Strömungsgeschwindigkeiten bzw. Drehzahlen der Rührvorrichtung erhöht. Dies wiederum führt zu einer Verringerung der Fehler bei der Bestimmung der Leistungskennlinie für niedrige Reynoldszahlen.

Auf vorteilhafte Weise eignet sich Glukoselösung für das hochviskose Newtonsche Fluid, dessen Viskosität durch Veränderung des Mischungsverhältnisses der Lösung einstellbar und damit auf das jeweilige Rührsystem anpaßbar ist.

Das erfindungsgemäße Verfahren weist insbesondere den Vorteil auf, daß In-Situ-Messungen mit jedem beliebigen Rührwerk, sei es ein System im Labormaßstab oder ein Rührwerk in der Verwendung im großtechnischen Einsatz, durchgeführt werden kann. Damit können chemische Prozesse, die mit einer Viskositatsänderung einhergehen, verfolgt und überwacht werden. Dies ist insbesondere bei der Bierherstellung vorteilhaft, bei der der Reaktionsfortschritt von in einer Rührvorrichtung gerührter Maische durch eine Viskositätsbestimmung, die wiederum auf eine Messung der Leistungsaufnahme am Rührwerk und eine Drehzahlmessung zurückführbar ist, ermittelt werden kann.

Das erfindungsgemäße Verfahren unterscheidet sich insbesondere von den herkömmlich bekannten, auf Scherspalten beruhenden Viskosimetern dadurch, daß einerseits eine Rührvorrichtung, die sowohl zur Erzeugung laminarer als auch turbulenter Strömungen geeignet ist, eingesetzt wird, andererseits daß eine Vergleichsmessung gegenüber einem bekannten Newtonschen Fluid mit bekannter Viskosität durchgeführt wird, im Gegensatz zur Absolutmessung der dynamischen Viskosität gemäß den Viskosimetern nach dem Stand der Technik.

Erfindungsgemäß wird die zuvor genannte Aufgabe auch durch eine Vorrichtung zur Viskositätsmessung eines Fluids, insbesondere von Suspensionen mit hohen Feststoffbeladungen bzw. großen Partikeldurchmessem, mit Newtonschem und Nicht-Newtonschem Fließverhalten, gelöst, die eine Rührvorrichtung mit einem Rührbehälter, einem Rührorgan und einer Vorrichtung zur Erzeugung einer Drehbewegung des Rührorgans bezüglich des Rührbehälters, eine Vorrichtung zur Messung der Leistungsaufnahme für die Erzeugung der relativen Drehbewegung und eine Vorrichtung zur Messung der Drehzahl der relativen Drehbewegung umfaßt.

Vorteilhafterweise ist mit der erfindungsgemäßen Viskositätsmeßvorrichtung eine Doppelfunktion verbunden, nämlich die Möglichkeit, damit die Viskosität eines unbekannten, insbesondere feststoffbeladenen Fluids zu messen, als auch das für einen technischen Prozeß möglicherweise notwendige Rühren des Fluids zu bewerkstelligen.

In vorteilhafter Weise umfaßt die Leistungsaufnahmemeßvorrichtung eine Vorrichtung zur Messung des Drehmoments, das zur Erzeugung der relativen Drehbewegung bei in dem Rührbehälter vorhandenem Fluid erforderlich ist. Dabei kann die Drehmomentmessung entweder über Drehmomentaufnehmer, beispielsweise Dehnungsmeßstreifen, an dem Rührorgan oder durch Messung des Reaktionsmoments auf den nicht in Drehung versetzten Teil der Rührvorrichtung erfolgen. In diesem Fall ist vorteilhafterweise das in dem Rührbehälter vorgesehene Rührorgan über eine Drehwelle angetrieben, während der Rührbehälter drehbar gelagert ist und mit einer Kraftmeßeinrichtung zur Messung des Reaktionsdrehmoments des Rührbehälters gekoppelt ist. Dabei ist es insbesondere vorteilhaft, die drehbare Lagerung als nahezu reibungsfreie Luftlagerung auszubilden.

Bei einer weiteren vorteilhaften Ausführungsform, insbesondere im großtechnischen Maßstab, ist die Leistungaufnahmevorrichtung durch einen Frequenzumrichter mit integriertem Prozeßrechner ausgestaltet. Hierbei wird die Leistung über die aufgenommene elektrische Wirkleistung (cos ρ-korrigiert) ermittelt. Die zu berücksichtigenden Reibverluste von vorhandenen Abdichtungen und Getrieben sind in einem Versuch mit ungefülltem Rührkessel zu ermitteln.

Bei einer weiteren vorteilhaften Ausführungsform ist der Rührbehälter beheizbar, wodurch insbesondere Viskositätsänderungen innerhalb des zu untersuchenden Fluids durch Anregung eines chemischen Prozesses aufgrund der Wärmeeinwirkung erzeugbar sind. Damit können Prozeßabläufe aufgrund chemischer Reaktionen in Abhängigkeit von der Zeit durch kontinuierliche Bestimmung der dynamischen Viskosität in der erfindungsgemäßen Viskositätsmeßvorrichtung bestimmt werden.

Vorteilhafterweise ist das Rührorgan, das an einer drehbaren Welle angebracht ist, mit Anbaumitteln bewehrt (sog. Strombrecher), um möglichst hohe Leistungsaufnahmen auch bei niedrigen Drehzahlen zu erzielen, wodurch wiederum die Meßgenauigkeit für die Leistungsaufnahme bei niedrigen Drehzahlen erhöht wird. Damit wird der Fehler in der Leistungscharakteristik für den Leistungsbeiwert bei niedrigen Reynoldszahlen verringert.

In vorteilhafter Weise ist die erfindungsgemäße Viskositätsmeßvorrichtung als Teil eines Systems zur Bierherstellung vorgesehen. Durch die Doppelfunktion der erfindungsgemäßen Viskositätsmeßvorrichtung sowohl zur Viskositätsmessung als auch als Rührwerk kann damit der Reaktionsfortschritt eines reaktionsfähigen Fluids, wie z.B. der Maische bei der Bierherstellung, durch kontinuierliche Messung der Viskosität überwacht werden. Durch geeignete Variation der Drehzahlen können den Reaktionsfortschritt charakterisierende rheologische Veränderungen des Fluids ermittelt werden, wie z.B. Auflösen der Feststoffpartikel, Verkleisterungsphasen, Zunahme des Extrakts.

Weitere vorteilhafte Ausführungsformen gehen aus den Unteransprüchen hervor.

Nachfolgend wird die vorliegende Erfindung anhand bevorzugter Ausführungsformen in bezug auf die begleitenden Zeichnungen näher erläutert und beschrieben.

In den Zeichnungen zeigen:

Fig. 1 ein Ausführungsbeispiel einer erfindungsgemäßen Viskositätsmeßvorrichtung;

Fig. 2 ein Ausführungsbeispiel für ein in der Viskositätsmeßvorrichtung nach der Fig. 1 verwendetes Rührorgan; und

Fig. 3 eine Grafik, die eine typische Leistungskennlinie einer erfindungsgemäßen Viskositätsmeßvorrichtung zeigt.

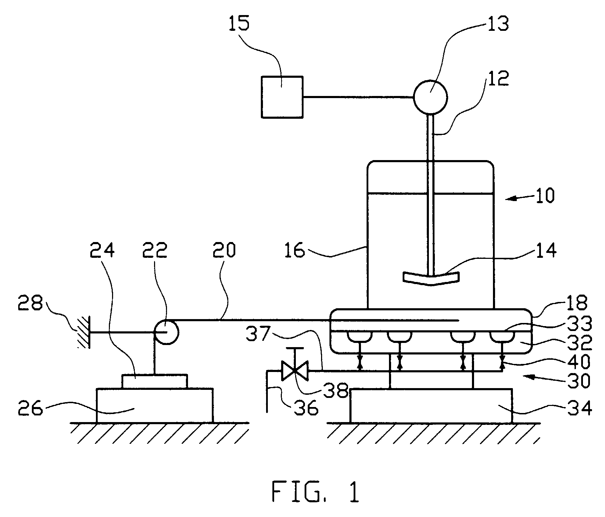

In der Figur 1 ist eine erfindungsgemäße Viskositätsmeßvorrichtung dargestellt, die eine Rührvorrichtung 10 umfaßt. Die in diesem Beispiel gezeigte Rührvorrichtung 10 umfaßt eine Rührwelle 12, an derem unteren Ende ein Rührorgan 14 angebracht ist. Die Rührwelle 12 mit dem Rührorgan 14 befindet sich in einem Rührbehälter 16. Die Rührwelle 12 ist mit einem Motor 13 gekoppelt, mit dem eine Drehbewegung um die Längsachse der Rührwelle erzeugbar ist. Ein Drehzahlmesser 15 ist beispielsweise mit dem Motor 13 gekoppelt, mit dem die Drehzahl des Motors und somit der Rührwelle 12 gemessen werden kann.

Zur Messung einer Leistungsaufnahme ist in der gezeigten Ausführungsform eine Vorrichtung zur Messung des Reaktionsmoments des Rührkessels bei Betätigung des Motors 13 und Rührens eines in dem Rührkessel 16 vorgesehenen Fluids vorhanden. Die Vorrichtung zur Messung der Leistungsaufnahme umfaßt einen drehbar gelagerten Drehteller 18, der an einem Befestigungspunkt im Abstand von seinem Drehpunkt mit einem Seil 20 verbunden ist, das über eine Umlenkrolle 22 mit einem Gewicht 24 an seinem anderen Ende verbunden ist. Das Gewicht 24 ruht auf einer Waage 26, mit der die Gewichtskraft des Gewichts 24 meßbar ist. Die Umlenkrolle 22 ist über eine Fixierung 28 gehalten. Alternativ kann das Seil 20 direkt an eine Kraftmeßzelle montiert sein, wenn diese waagrecht angeordnet wird.

Vorteilhafterweise ist der Drehteller 18 weitgehend reibungsfrei gelagert. Damit ist eine besonders genaue Messung des Reaktionsmoments auf den Rührbehälter 16 möglich. Eine nahezu reibungsfreie Lagerung wird erzielt durch eine Luftlagerung 30, die einen Lagerteller 32 umfaßt, in dem Luftleitungen und Luftaustrittsöffnungen 33 vorgesehen sind, mit deren Hilfe durch einen austretenden Luftstrom der Drehteller 18 reibungsfrei lagerbar ist. Zur Versorgung mit Druckluft ist eine Leitung 36 vorgesehen, in der ein Drosselventil 38 eingebaut ist. Eine an das Drosselventil 38 anschließende Leitung 37 verzweigt zu einer Vielzahl von weiteren Drosseln 40 zur Versorgung der Luftaustrittsöffnungen 33 in dem Lagerteller 32.

Der Lagerteller 32 wird gehalten durch eine Basis 34.

Im Unterschied zu der in der Fig. 1 gezeigten Vorrichtung zur Leistungsaufnahmemessung wäre es auch möglich, das Drehmoment der Rührerwelle bei fixiertem Rührbehälter zu messen. Dazu können Drehmomentaufnehmer, z.B. Dehnungsmeßstreifen, an der Rührwelle vorgesehen sein. Die Leistungsaufnahme kann auch über den Motor zum Antrieb des Rührorgans 14 bestimmt werden durch Messung der aufgenommenen elektrischen Leistung.

Die Rührvorrichtung 10 besitzt in der in Fig. 1 gezeigten beispielhaften Ausführungsform eine mittig angeordnete Rührwelle. Entsprechend der skizzierten Ausführungsform wird ein wandferner Rührer verwirklicht, bei dem das Verhältnis der gesamten Länge des Rührorgans 14 zum Verhältnis des Durchmessers des Rührbehälters 16 in der Größenordnung von ca. 0,7 ist. Die Erfindung ist jedoch in keiner Weise auf ein solches wandfernes Rührorgan oder das Verhältnis der Rührerlänge zum Durchmesser des Rührbehälters beschränkt.

Ganz im Gegenteil, wie nachfolgend aus der Erläuterung des Verfahrens zur Messung der Viskosität mit dem zuvor genannten Viskositätsmeßgerät noch genauer hervorgehen wird, liegt ein großer Vorteil der vorliegenden Erfindung darin, daß die Viskositätsmeßvorrichtung nicht durch die Art der Rührvorrichtung eingeschränkt wird. Vorteilhafterweise ist die Rührvorrichtung so ausgebildet, daß insbesondere Fluide mit relativ groben Partikelbestandteilen, wie z.B. bei der Bierherstellung vorkommende Maischen mit Faserbestandteilen in der Länge von 4-5 mm, problemlos verarbeitet werden können. Die Rührvorrichtungsdimensionierung ist ebenfalls in keiner Weise beschränkt. So sind einerseits kleine Rührvorrichtungen im Labormaßstab, die nur zur Aufnahme einer begrenzten Menge des zu untersuchenden Fluids, beispielsweise im Bereich von 1-10 Litern, geeignet sind, oder andererseits im großtechnischen Maßstab ausgelegte Rührwerke mit Kapazitäten von mehreren Kubikmetern für die erfindungsgemäße Viskositätsmeßvorrichtung geeignet.

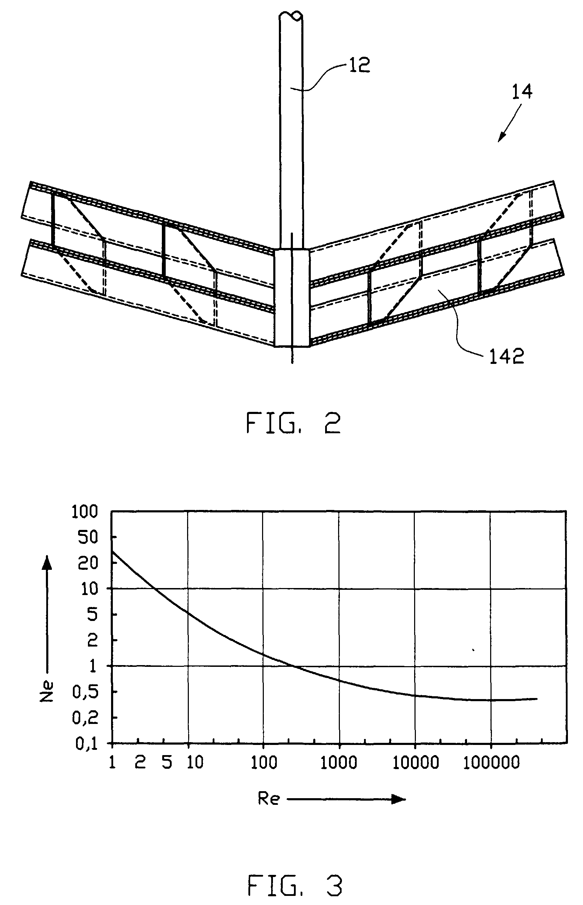

Anstelle der in der Ausführungsform der Fig. 1 gezeigten Rührvorrichtung mit mittiger Rührwelle sind auch Systeme mit exzentrischer Anordnung des Rührorgans geeignet. Ganz allgemein ist es für die vorliegende Erfindung lediglich notwendig, daß die Rührvorrichtung die Eignung besitzt, eine möglichst effiziente Wechselwirkung des Rührvorgangs mit dem zu untersuchenden Fluid zu schaffen, um eine, wie später noch genauer zu erläuternde, stark nichtlineare Abhängigkeit des Leistungsbeiwerts bei niedrigen Reynoldszahlen, d.h. im nichtturbulenten Bereich (laminarer Bereich und Übergangsbereich), zu erzeugen. Zu diesem Zweck ist beispielsweise das Rührorgan 14 beispielhaft mit den in Fig. 2 gezeigten schaufelartigen Anbauten 142, die an der Rührwelle 12 vorgesehen sind, ausgestattet.

Generell sind jedoch auch andere Rührorgane, wie z.B. Wendelrührer, Propellerrührer oder Schneckenrührer geeignet.

Die Erfindung umfaßt selbstverständlich auch eine Abwandlung, wonach der Rührbehälter an einen Motor zur Erzeugung einer Drehbewegung gekoppelt ist, während das Rührorgan 14 in seiner Lage fixiert ist. Die Drehmomentabnahme kann in diesem Fall wieder entweder durch Messung des Reaktionsmoments am Rührorgan bzw. einer Rührachse oder über geeignete Drehmomentaufnehmer, an einer Drehwelle zur Erzeugung der Drehbewegung des Rührbehälters erfolgen.

Nachfolgend soll das erfindungsgemäße Verfahren zur Viskositätsmessung unter Verwendung einer Rührvorrichtung, wie sie beispielsweise in bezug auf Fig. 1 beschrieben wurde, genauer erläutert werden.

Zunächst wird ein Vergleichsfluid mit bekannter Viskosität in den Rührbehälter 16 von oben eingefüllt. Obwohl eine spezielle Abdichtung des Rührbehälters nicht unbedingt notwendig ist, so ist es dennoch denkbar, einen Deckel oder Verschluß über dem Rührbehälter 16 vorzusehen. Anschließend wird das Rührorgan in Drehung versetzt. Über den Motor 13 werden verschiedene, durch den Drehzahlmesser 15 ermittelbare Drehzahlen der Rührwelle 12 erzeugt. Für jede bestimmte, gemessene Drehzahl wird das Reaktionsmoment des Rührbehälters über eine Messung der Reaktionskraft F in Verbindung mit der bekannten Hebelarmlänge, die durch den radialen Ansatzpunkt des Seiles 20 am Drehteller 18 gegeben ist, ermittelt. Aus dem Reaktionsmoment M ergibt sich in Verbindung mit der bekannten Drehzahl n die Leistungsaufnahme P.

$$P = M \times \omega = M \times 2 \times \pi \times n = F \times L \times 2 \times \pi \times n$$

Für jede Drehzahl wird die Leistungsaufnahme umgerechnet in den Leistungsbeiwert Ne (Newtonzahl) gemäß folgender Formel:

$$Ne = P / (\rho \times n^3 \times d^5), \qquad (1)$$

wobei $\rho$ die Dichte des im Rührbehälter vorgesehenen Fluids, n die Drehzahl und d der Rührdurchmesser des Rührorgans 14 ist. Außerdem wird für jede Messung bei vorgegebener Drehzahl die Reynoldszahl Re gemäß folgender Formel ermittelt:

$$Re = n \times d^2 \times \rho / \eta, \qquad (2)$$

wobei $\eta$ die dynamische Viskosität des Mediums ist bzw. bei Nicht-Newtonschen Fluiden die dynamische Viskosität für die jeweilige drehzahlabhängige Schertate.

Die obige Formel für die Reynoldszahl gilt jedoch nur für Newtonsche Medien, bei denen das Newtonsche Reibungsgesetz gilt. Das Newtonsche Reibungsgesetz beschreibt die Stärke der Reibungskraft zwischen den einzelnen Schichten einer laminaren Strömung. Dabei ist die Kraft, die auf eine einzelne Schicht wird, proportional zur Fläche der Schicht und zum Geschwindigkeitsgradienten zu den benachbarten Schichten.

Um die korrekte Korrelation zwischen der Reynoldszahl und der dynamischen Viskosität sicherzustellen, ist es erforderlich, die anfänglichen Messungen der Leistungsaufnahme bei verschiedenen Drehzahlen mit einem bekannten Newtonschen Fluid, das dem Newtonschen Reibungsgesetz gehorcht, durchzuführen. Insbesondere ist es vorteilhaft, hochviskose Newtonsche Fluide zu verwenden, da in diesem Fall eine vergleichsweise hohe Leistungsaufnahme auch noch bei sehr niedrigen Drehzahlen auftritt. Damit sind genaue Messungen der Leistungsaufnahme auch noch im Bereich niedriger Drehzahlen und somit vergleichsweise kleiner Reynoldszahlen möglich. Es ist besonders vorteilhaft, Glukoselösung als das Newtonsche Fluid zu verwenden. Durch Veränderung des Mischungsverhältnisses ist bei Glukoselösungen die dynamische Viskosität an die Erfordernisse des Systems anpaßbar.

Die Meßergebnisse in Form des Leistungsbeiwerts Ne in Abhängigkeit von der Reynoldszahl Re werden in Form eines Diagramms, wie es in Fig. 3 gezeigt ist, aufgetragen. Diese Leistungskennlinie ist ruhrwerksspezifisch. Der Leistungsbeiwert in Abhängigkeit von der Reynoldszahl ändert sich in Abhängigkeit von der Geometrie, Dimensionierung oder der Gestaltung, z.B. der Anbauelemente des Rührorgans.

Andererseits ist diese Leistungskennlinie jedoch unabhängig von der Viskosität des im Rührbehälter vorhandenen Fluids. Dies bildet die Grundlage für die Viskositätsmessung gemäß der vorliegenden Erfindung, die auf einem Vergleich des Fluids mit unbekannter Viskosität mit einem Fluid bekannter Viskosität anhand dieser Leistungskennlinie beruht.

Zur Messung der Viskosität des zu untersuchenden Fluids wird dieses anstelle des zuvor verwendeten Fluids bekannter Viskosität in dem Rührbehälter vorgesehen. Nun werden wiederum Leistungsmessungen bei unterschiedlichen Drehzahlen durchgeführt. Die Leistungsaufnahme wird wiederum umgerechnet in den Leistungsbeiwert, aus dem die entsprechende Reynoldszahl gemäß der zuvor aufgenommenen, in der Fig. 3 gezeigten Leistungskennlinie ermittelt wird. Sofern es sich bei dem zu untersuchenden Fluid um ein Newtonsches Fluid handelt, reicht ein einziger Meßwert der Leistungsaufnahme und der Drehzahl zur Bestimmung der dynamischen Viskosität gemäß den o.g. Formeln 1 und 2.

Aus der in Fig. 3 gezeigten Leistungskennlinie ist ersichtlich, daß die Messung der Leistungsaufnahme im nichtturbulenten Bereich durchgeführt werden muß, d.h. bei Reynoldszahlen kleiner als 10.000, da sonst keine eindeutige Zuordnung eines ermittelten Leistungsbeiwerts Ne zu einer bestimmten Reynoldszahl möglich ist. Wie aus der Fig. 3 deutlich ersichtlich ist, nimmt die Leistungskennlinie für Reynoldszahlen oberhalb von 10.000, d.h. oberhalb von Re > $R_{tubulent}$, einen waagrechten Verlauf an.

Die vorliegende Erfindung ist jedoch insbesondere vorteilhaft zur Bestimmung der dynamischen Viskosität Nicht-Newtonscher Fluide. Nicht-Newtonsche Fluide, wie Suspensionen, unterscheiden sich in ihrer Viskosität stark von der der reinen Trägerflüssigkeit ohne jegliche Feststoffbeladung. Beim Nicht-Newtonschen Fluid ist ein verändertes Fließverhalten vorhanden, das in Abhängigkeit von der Art des Feststoffes zu einem strukturviskosen oder dilatenten Fließverhalten führt.

Für Nicht-Newtonsche Fluide ist die Viskosität abhängig von der Scherrate, d.h. der Strömungsgeschwindigkeit des Fluids. Die Scherrate korreliert im wesentlichen mit der Drehzahl des Rührorgans. Für ein Nicht-Newtonsches Medium kann die einem Exponentialverlauf folgende scherratenabhängige dynamische Viskosität aus der nachfolgenden Ostwald-Gleichung ermittelt werden, wenn wenigstens drei Meßpunkte vorliegen, aus der k und m ermittelt werden können.

$$\eta = k / \dot{\gamma}^{\,1-m}, \qquad (3)$$

wobei k eine Konstante der Dimension Pa.s$^m$ (Konsistenzfaktor) ist, m (Fließindex) eine ganze Zahl und $\dot{\gamma}$ ein Maß für den Leistungsbeiwert ist.

Somit wird durch die Bestimmung der Leistungsaufnahme bei drei Drehzahlen einer Gleichung, und daraus durch Bestimmung des Leistungsbeiwerts bei unterschiedlichen Drehzahlen über eine Lösung der Ostwald-Gleichung die dynamische Viskosität des zu untersuchenden Fluids erhalten. Die Messungen werden vorteilhafterweise in einem Bereich hoher Steigung der in Fig. 3 gezeigten Leistungskennlinie, d.h. bei niedrigen Reynoldszahlen durchgeführt, da dort die höchste Genauigkeit für die Lösung des Gleichungssystems aus den Ostwald-Gleichungen erzielbar ist. Außerdem sollten die Meßpunkte geeignet beabstandet sein, um die in die Lösung der Ostwald-Gleichungen einfließenden Meßfehler möglichst gering zu halten.

Im Bereich niedriger Reynoldszahlen folgt die Leistungskennlinie näherungsweise einem Verlauf von 1/Re. Je näher die Leistungskennlinie dem 1/Re-Verlauf folgt, d.h. je kleiner die Reynoldszahlen sind, desto besser kann durch die analytische Beschreibung der Leistungskennlinie die gesuchte scherratenabhängige dynamische Viskosität des zu untersuchenden Nicht-Newtonschen Fluids erhalten werden.

Die scherratenabhängige dynamische Viskosität eines Nicht-Newtonschen Mediums kann sich zeitlich verändern. Dies tritt insbesondere bei Strukturviskosität des Mediums auf, die entsteht durch die Zerstörung von Vernetzungspunkten zwischen Makromolekülen und Partikeln und deren Ausrichtung entsprechend der Deformation des Mediums. Soweit keine Regeneration auftritt, kann hierdurch über die zeitliche Änderung der Viskosität der Zustand des gerührten Mediums in Abhängigkeit von der Zeit bestimmt werden.

Andererseits läßt sich durch eine zeitliche Abhängigkeit der dynamischen Viskosität auch ein Reaktionszustand einer chemisch reaktionsfähigen Substanz ermitteln, sofern der Anfangs- und Endzustand unterschiedliche Viskosität aufweisen. Dies läßt sich vorteilhaft beispielsweise bei der Bierherstellung einsetzen, wo ein vorbestimmter Reaktionsprozeßfortschritt der in einer Rührvorrichtung durchmischten Maische bestimmt werden soll. Da der Prozeßfortschritt der Masche in eindeutigem Zusammenhang einer ermittelbaren Viskosität steht, kann durch eine zeitlich andauernde Messung der dynamischen Viskosität, die auf eine Leistungsmessung bei gegebener Drehzahl zurückgeführt wird, der Reifegrad der Maische ermittelt werden. Die Kontrolle des Reaktionsfortschritts mittels Leistungsmessung wird begünstigt durch die Temperaturführung des Prozesses. Der Maischprozeß wird bei verschiedenen Temperaturniveaus gefahren, die jeweils das enzymspezifische Temperaturoptimum darstellen, so daß die Leistungs- bzw. Viskositätsänderung zum jeweiligen Temperaturniveau Aufschluß über den Fortschritt der korrespondierenden Enzymreaktion gibt. Typische durch Viskositätsänderung charakterisierende Reaktionsphasen sind z. B. Kolloidbildung in der Verkleistungsphase, Abbau von Feststoffpartikel (Grieße), Abbau von hochmolekularen Eiweißverbindungen.

Zur Stimulierung einer chemischen Reaktion, die die Viskosität des gerührten Fluids verändert, ist vorteilhafterweise eine Heizvorrichtung an der Rührvorrichtung vorgesehen. Es können weitere Einrichtungen, die zur Ingangsetzung einer chemischen Umwandlung geeignet sind, wie Einspeisungsvorrichtungen für chemische Zusatzstoffe, etc., an der Rührvorrichtung vorgesehen sein.

Die erfindungsgemäße Viskositätsmeßvorrichtung und das erfindungsgemäße Verfahren zur Messung der Viskosität besitzen insbesondere den Vorteil, daß die dynamische Viskosität für Nicht-Newtonsche Fluide bestimmbar sind, die mit den herkömmlichen Viskosimetern, z.B. dem Rotationsviskosimeter, nicht ermittelbar waren. Insbesondere bei Medien mit Beladung von sehr groben Feststoffen, wie Biermaischen, in denen Fasern (Spelzen) mit mehreren Millimetern Länge vorhanden sind, wird durch die Erfindung die bisher nicht bestehende Möglichkeit der Viskositätsmessung geschaffen. Die Erfindung ist außerdem insbesondere darin vorteilhaft, daß eine In-situ-Messung der Viskosität mit der im großtechnischen Einsatz verwendeten Rührvorrichtung möglich ist. Damit kann mit einer beliebigen Rührvorrichtung die Viskosität unbekannter Newtonscher oder Nicht-Newtonscher Medien bestimmt werden, wenn einmal eine Eichung unter Aufnahme der Leistungskennlinie der Rührvorrichtung mittels eines bekannten Newtonschen Mediums durchgeführt wurde.

**Patentansprüche**

1.  Verfahren zur Viskositätsmessung von Fluiden, insbesondere von Suspensionen mit hohen Feststoffbeladungen bzw. großen Partikeldurchmessern, mit Newtonschem und Nicht-Newtonschem Fließverhalten, unter Verwendung einer Rührvorrichtung mit einem Rührbehälter zur Aufnahme eines Fluids einem in dem Rührbehälter angeordneten Rührorgan, und einer Vorrichtung zur Erzeugung einer Drehbewegung des Rührorgans bezüglich des Rührbehälters,
    wobei die Leistungsaufnahme bei einer Vielzahl von ermittelbaren Drehzahlwerten für ein Fluid mit bekannter dynamischer Viskosität gemessen wird und eine rührvorrichtungsspezifische und von der Art des Mediums unabhängige Leistungskennlinie bestimmt wird, und

    Messen der Leistungsaufnahme bei wenigstens einer Drehzahl für das zu untersuchende Fluid, dessen Viskosität ermittelt werden soll, und

    Berechnen der gesuchten Viskosität des zu untersuchenden Mediums aus der Leistungskennlinie, der gemessenen Leistungsaufnahme und der für die Leistungsaufnahmemessung angewendeten Drehzahl.

2.  Verfahren nach Anspruch 1, wobei die rührvorrichtungsspezifische Leistungskennlinie bestimmt wird durch den Leistungsbeiwert (Ne) über der Reynoldszahl (Re).

3.  Verfahren nach Anspruch 1 oder 2, wobei die wenigstens eine Leistungsaufnahmemessung für das zu untersuchende Fluid im nichtturbulenten Bereich (Re < $Re_{turbulent}$) durchgeführt wird.

4.  Verfahren nach einem der Ansprüche 1 bis 3, wobei wenigstens drei Leistungsaufnehmemessungen für das zu untersuchende Fluid bei unterschiedlichen Drehzahlen durchgeführt werden.

5.  Verfahren nach einem der Ansprüche 1 bis 4, wobei zur Bestimmung der Leistungskennlinie ein Newtonsches Fluid mit hoher Viskosität verwendet wird.

6.  Verfahren nach Anspruch 5, wobei das hochviskose Newtonsche Fluid eine Glukoselösung ist.

7.  Verfahren nach einem der Ansprüche 1 bis 6, wobei die Leistungsmessung eine Drehzahlmessung und eine Messung des Drehmoments zur Erzeugung der Drehbewegung in der Rührvorrichtung umfaßt.

8.  Verfahren nach einem der Ansprüche 1 bis 6, wobei die Leistungsmessung eine Drehzahlmessung und eine Messung eines Reaktionsmoments des nicht in Drehung versetzten Elements der Rührvorrichtung umfaßt.

9.  Verfahren nach einem der Ansprüche 1 bis 6, wobei die Leistungsmessung eine Messung einer von der Vorrichtung zur Erzeugung der Drehbewegung aufgenommenen elektrischen Leistung umfaßt.

10. Verfahren nach einem der Ansprüche 7 bis 10, wobei Stördrehmomente resultierend aus der Abdichtung, Getriebe oder Lagerung der Rührwelle in einer Vergleichsmessung mit unbefülltem Rührbehälter kalibriert werden.

11. Verfahren nach einem der Ansprüche 1 bis 10, wobei eine Rührvorrichtung mit fixiertem Rührbehälter und drehbarem Rührorgan verwendet wird.

12. Verfahren nach Anspruch 11, wobei das Rührorgang mit Anbauteilen bewehrt ist.

13. Verfahren nach einem der vorhergenannten Ansprüche, wobei der Rührerbehälter beheizt wird und die Leistungsaufnahmemessungen für das zu untersuchende Fluid zu vorbestimmten Zeitabständen wiederholt werden zur Bestimmung einer Zeitabhängigkeit der dynamischen Viskosität des untersuchten Fluids.

14. Viskositätsmeßvorrichtung zur Viskositätsmessung insbesondere von Suspensionen mit hohen Feststoffbeladungen bzw. großen Partikeldurchmessern, mit Newtonschem und Nicht-Newtonschem Fließverhalten, mit

einer Rührvorrichtung (10), die einen Rührbehälter (16), ein Rührorgan (14) und eine Vorrichtung (12, 13) zur Erzeugung einer Drehbewegung des Rührorgans bezüglich des Rührbehälters umfaßt,

einer Vorrichtung (30) zur Messung der Leistungsaufnahme zur Erzeugung der relativen Drehbewegung, und

einer Vorrichtung (15) zur Messung der Drehzahl der relativen Drehbewegung.

15. Viskositätsmeßvorrichtung gemäß Anspruch 14, wobei die Leistungsaufnahmerneßvorrichtung eine Vorrichtung zur Messung des Drehmoments zur Erzeugung der relativen Drehbewegung umfaßt.

16. Viskositätsmeßvorrichtung gemäß Anspruch 15, wobei die Vorrichtung zur Drehmomentmessung einen Drehmomentaufnehmer unter Verwendung von Dehnungsmeßstreifen umfaßt.

17. Viskositätsmeßvorrichtung gemäß einem der Ansprüche 15 oder 16, wobei die Leistungsaufnahmemeßvorrichtung eine Vorrichtung zur Messung des Reaktionsmoments des nicht in Drehung versetzten Teils der Rührvorrichtung umfaßt.

18. Viskositätsmeßvorrichtung gemäß Anspruch 17, wobei die Rührvorrichtung eine mit dem Rührorgan (14) verbundene, drehbare Rührwelle (12) aufweist, und wobei der Rührbehälter mit einer Vorrichtung zur Messung des Reaktionsmoments versehen ist.

19. Viskositätsmeßvorrichtung gemäß Anspruch 14, wobei die Leistungsaufnahmemeßvorrichtung von der Rührvorrichtung aufgenommene elektrische Leistung mißt.

20. Viskositätsmeßvorrichtung nach Anspruch 19, wobei die Leistungaufnahmemeßvorrichtung einen Frequenzumrichter zur Ermittlung der aufgenommenen elektrischen Wirkleistung aufweist.

21. Viskositätsmeßvorrichtung gemäß Anspruch 18, wobei die Vorrichtung zur Messung des Reaktionsmoments des Rührbehälters eine drehbare Lagerung des Rührbehälters und eine Kraftmeßvorrichtung zur Messung eines am Rührbehälter angreifenden Reaktionsdrehmoments umfaßt.

22. Viskositätsmeßvorrichtung gemäß Anspruch 21, wobei die drehbare Lagerung (30) eine Luftlagervorrichtung aufweist.

23. Vorrichtung nach einem der Ansprüche 14 bis 22, wobei der Rührbehälter beheizbar ist.

24. Vorrichtung nach einem der Ansprüche 14 bis 23, wobei das Rührorgan an einer drehbaren Welle (12) angebracht ist und mit Anbaumitteln (142) bewehrt ist.

25. Verfahren zur Bestimmung des Reaktionsfortschritts eines reaktionsfähigen Fluids, wobei der Reaktionsfortschritt bestimmt wird durch eine Messung der Viskosität des Fluids gemäß einem der in den Ansprüchen 1 bis 13 bezeichneten Verfahren.

26. Verwendung einer Viskositätsmeßvorrichtung gemäß einem der Ansprüche 14 bis 24 zur Bestimmung des Reaktionsfortschritts der Maische bei der Bierherstellung.

FIG. 1

FIG. 2

FIG. 3